# EUROPEAN PATENT SPECIFICATION

(11) **EP 0 552 521 B1**
(45) Date of publication and mention of the grant of the patent: **22.05.1996**
(21) Application number: 92300488.1
(22) Date of filing: 21.01.1992
(51) Int. Cl.: F16H 59/04, B60K 20/02, F16C 11/06

(54) **A gear lever structure**
Schalthebellagerung
Montage de levier de vitesses

(43) Date of publication of application: 28.07.1993
(73) Proprietor: UNITED INDUSTRIES OPERATIONS LIMITED, Huntington, York YO3 9GZ (GB)
(72) Inventor: Gilham, Roger Stanley, Braintree, Essex, CM7 7NY (GB); Romer, Hugh Frank, Bushey, Hertfordshire, WD2 1AN (GB)
(74) Representative: Walters, Frederick James

(56) References cited:
- DE-A- 3 341 878
- DE-C- 3 305 422
- US-A- 4 662 772

## Description

### TECHNICAL FIELD & BACKGROUND ART

The present invention relates to a gear lever structure. It is primarily concerned with such structures for manual shift gears as are typically found in motor vehicles and which comprise a longitudinally extending gear rod, shaft or similar component having a ball with a part spherical bearing surface substantially concentric with the rod. The ball is located on the rod between and remote from the ends thereof and is located and retained in a housing with its part spherical bearing surface accommodated in a substantially complementary part spherical seating to provide a universal bearing for pivotal displacement of the rod. In a typical structure for a manual gear change lever one end of the rod has fitted thereto a handle and the other end is provided with a coupling component for connection to a gear unit. In known gear lever structures of the kind discussed above the ball is forged or otherwise integrally formed with a metal rod, possibly with the coupling component for the gear unit also being formed integral or welded to the rod. Such a structure is relatively heavy and expensive (particularly the finishing to ensure that an accurate part spherical bearing surface is presented by the ball). It has also been proposed to mould the ball in plastics onto a metal rod so that the plastics of the ball forms an interference fit with an appropriate profile along part length of the rod (thereby restraining the ball from longitudinal and rotational displacement on the rod). However, with this latter moulding technique and where the coupling component is welded to the end of the rod for connection to a gear unit, it is necessary for the coupling component to be welded in position prior to the ball being moulded onto the rod. If the plastics ball is moulded onto the rod prior to the component being welded thereto, the heat developed during the welding operation could adversely affect the ball moulding. These procedural steps for the moulded-on plastics ball are relatively expensive and inconvenient as it is usually necessary to provide some form of protection to the exposed part length of the gear rod and its coupling component whilst it is being handled for the moulding operation.

A further proposal in Patent DE-C-3,305,422 has a gear lever structure in which the aforementioned ball is formed as an assembly of bearing members around the gear rod. Each bearing member has a projection which engages with a recess in the gear rod so that the engagement of said projections with the gear rod restrains the assembled ball against rotation and longitudinal displacement relative to the rod whilst the bearing members are maintained as a ball assembly on the rod by a housing within which the ball is accommodated and borne to exhibit the required pivotal displacement of the rod. This prior proposal is considered to be the most relevant to the present invention. A further prior proposal in Patent U.S.-A-4,662,772 also discloses an arrangement in which the ball is an assembly of bearing members about the rod but in this case the assembled ball is restrained against rotation and longitudinal displacement relative to the rod by co-operation of the bearing members with flats machined in recesses in a cylindrical gear rod.

It is an object of the present invention to provide a gear lever structure which alleviates the disadvantages as aforementioned of the prior proposals and particularly permits the gear rod to be provided with the ball for its bearing in a relatively quick, simple, efficient and cost effective manner.

### STATEMENT OF INVENTION & ADVANTAGES

According to the present invention there is provided a gear lever structure comprising a longitudinally extending gear rod having a ball with a part spherical bearing surface substantially concentric with the rod and by which the rod is to be mounted to exhibit universal pivotal movement, said ball being located on the rod between and remote from the ends thereof and comprising at least two moulded bearing members which present said bearing surface and are assembled on and around the rod to engage with each other in a substantially longitudinally extending plane or planes, said bearing members being retained on the rod to be restrained against rotation and longitudinal displacement relative thereto, CHARACTERISED IN THAT the bearing members each comprise clip means with which the gear rod engages for each bearing member to be retained on the rod independently of the other bearing member or members.

By the present invention it is envisaged that the part spherical bearing surface of the ball on the gear rod is provided by an assembly of two or more moulded bearing members on and around the rod. Usually the bearing surface of the ball will be a major portion of a sphere and a part of that bearing surface will be provided on each moulded bearing member. The gear rod will extend continuously through the assembled bearing members so that the ball is generally tubular in form. The bearing members will usually be moulded in plastics such as known oil filled acetal with friction modifiers, glass sphere filled nylon or other appropriate thermoplastics or thermoset plastics material as will be apparent to persons skilled in the art. It is preferred that the bearing members are moulded in a thermoplastics so that they have an element of resilience to facilitate their inter-engagement, possibly with each other and/or with the rod, as will be discussed hereinafter as preferred features of the invention. The facility of the invention to assemble the ball from the bearing members alleviates the cost and inconvenience of moulding the ball directly onto the rod following the welding of the coupling component thereto. Furthermore, the assembly of the ball may be effected simply, accurately and inexpensively by inexperienced personnel. Preferably the ball is formed by two bearing members. It is also preferred that the two or more bearing members are substantially identical to each other. The use of identical plastics bearing members is preferred to alleviate cost as it is only necessary to provide a single moulding tool for those members.

Preferably the bearing members have projections and recesses which engage in substantially complementary manner between those members during assembly of the ball on the rod. The engagement of these projections and recesses conveniently serves to accurately locate the bearing members relative to each other to present the part spherical bearing surface accurately to appropriate tolerances for the intended bearing. The co-operation between the projections and recesses, which are conveniently in the form of complementary engaging sockets and studs or pins, can conveniently serve to retain the bearing members in their assembly.

Each bearing member directly engages with the gear rod to be retained thereon independently of the other bearing member or members. With this in mind, the bearing members include clip means, for example by which each such member can snap engage with (such as clip onto) the rod.

To provide a compact ball member it is preferred that each of the aforementioned projections and recesses, and also the clip means for individually engaging each bearing member with the gear rod, is located within the volume of the ball defined by its part spherical bearing surface.

Conventionally a gear rod has a predominantly cylindrical profile. However, it is preferred that at least a part length of the rod is of non-circular section and that the bearing members co-operate with that section to restrain the ball from rotation about the rod. Preferably the ball is restrained against longitudinal displacement relative to the rod by engagement of substantially complementary and laterally extending grooves and recesses between the rod and the bearing members. Again it is preferred that the aforementioned complementary engaging laterally extending grooves and recesses are located within the volume of the ball defined by the part spherical bearing surface so that a compact ball is formed.

Usually the longitudinally extending plane(s) or split(s) through which the bearing members engage or abut each other will be located in a diametral plane or planes of the bearing surface and which diametral plane or planes include the longitudinal axis of the part length of the gear rod that extends through the ball. In such an arrangement and where the ball is formed by two identical bearing members which are moulded with the co-operating recesses and grooves, projections and recesses, clip means and similar features as previously discussed. such features may be appropriately off-set from a lateral centre line on each ball member so that in the assembly of the ball, one bearing member will be inverted longitudinally with respect to the other bearing member.

The bearing members may be bonded to each other and/or to the gear rod to form the ball as a permanent fitting. The bearing members may be additionally retained on the gear rod by the fitment of the ball in a housing where the part spherical bearing surface is accommodated in a substantially complementary part spherical seating to provide a universal bearing for pivotal displacement of the rod during gear changing.

Desirably the bearing members are relieved over their respective marginal edge portions adjacent to the part spherical bearing surface and where a split is formed between the or two adjacent bearing members in the ball so that the effective diameter of the ball along such relieved marginal edges is less than the diameter of the part spherical bearing surface. The relieved portions may be extremely small and are intended to accommodate for permitted tolerances in the moulding of the bearing members (which tolerances may otherwise result in an unacceptable edge being presented along the line of abutment between the or adjacent bearing members in the bearing surface).

### DRAWINGS

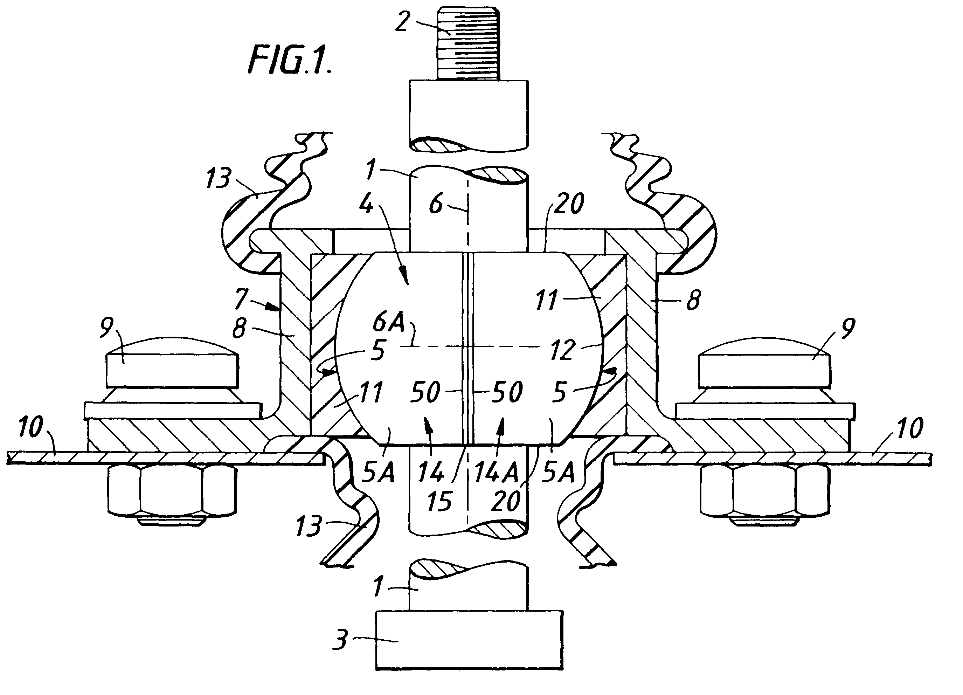

One embodiment of a gear lever structure constructed in accordance with the present invention will now be described, by way of example only, with reference to the accompanying illustrative drawings in which:-
Figure 1 is a diagrammatic illustration of the structure showing the ball mounted in a housing to provide universal pivotal movement for the gear rod, the housing being shown in section;
Figure 2 is an end view of a bearing member from two of which such members the ball in Figure 1 is assembled;
Figure 3 is a side view of the bearing member shown in Figure 2;
Figure 4 is a section of the bearing member taken on the line A-A of Figure 3, and
Figure 5 shows a part length of the gear rod on and around which part length two bearing members are assembled to form the ball in the structure of Figure 1.

### DETAILED DESCRIPTION OF DRAWINGS

The gear lever structure illustrated is intended for use in a motor vehicle having a manual shift for selecting a particular gear or automatic gear change and comprises a cylindrical metallic gear rod 1 having at one end thereof a threaded boss 2 to which is to be fitted a handle (not shown). The opposite end of the rod 1 has secured thereto, typically by welding, a component 3 appropriate for coupling the gear rod in known manner to a gear unit (not shown). Provided on the rod 1 between the ends thereof and remote from those ends is a ball 4 which is to form part of a universal ball joint by which the gear rod is to be pivotally mounted in the vehicle for displacement of the component 3 to effect a gear change in known manner.

The ball 4 has a part spherical bearing surface 5 and is carried by the gear rod so that the surface 5 is concentric with the axis 6 of the part length of the rod which carries the ball. The ball 4 is mounted in a housing 7 having an outer casing 8 secured by bolts 9 to a frame 10 of the vehicle. The housing 7 includes a plastics liner 11 having a part spherical internal bearing surface 12 which is complementary to and within which the external part spherical bearing surface 5 of the ball 4 is seated and retained. The ball 4 may be located as a press fit within the sleeve 11 and fitted as a unit with the sleeve within the casing 8 or alternatively the sleeve 11 may be split laterally and formed as an assembly about the ball within the casing 8 - both of these techniques for assembling the ball with the housing are known in the art. Corrugated gaiters 13 of rubber or other flexible material are provided to form a protective closure between the housing 7 and the part lengths of the rod 1 which extend from opposite sides of the ball 4 in known manner. Although the component 4 is referred to as a "ball" it will be apparent from the drawings that it is not a complete ball shape although its exterior profile presents the external bearing surface 5 which is a major part of a sphere.

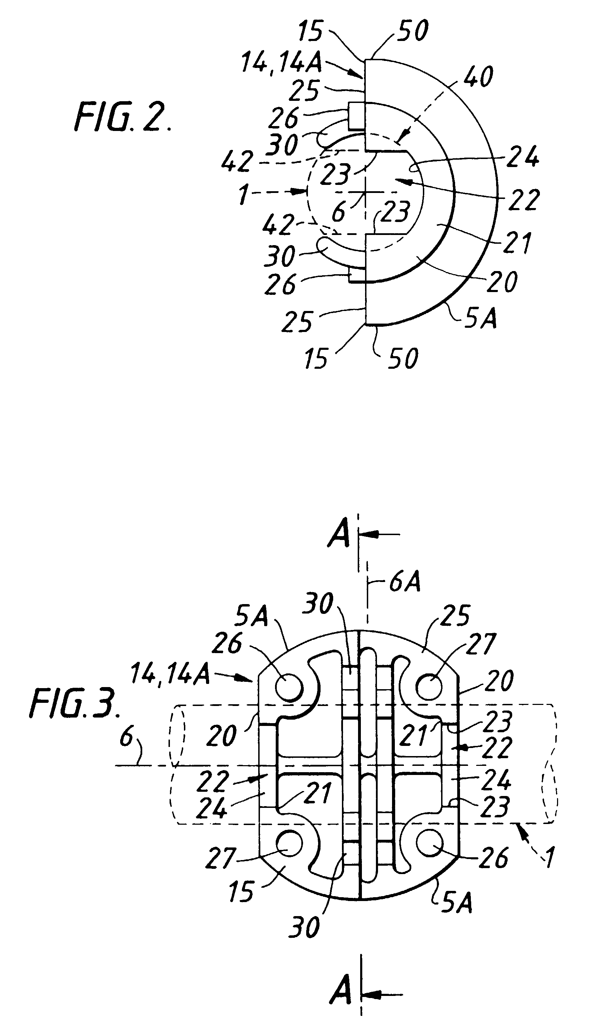

The ball 4 is formed as an assembly which consists of two identical bearing members 14 and 14A (one of which is shown in Figures 2 to 4) moulded in thermoplastics material.

The two bearing members 14 and 14A are assembled on and around the rod 1 to abut each other with a split 15. The plane of the split 15 extends diametrically with respect to the sphere of which the part spherical bearing surface 5 is part and this plane includes the rod axis 6. Consequently each bearing member has a portion 5A of the part spherical bearing surface 5 which portion is a major part of a hemisphere.

The identical bearing members 14 and 14A are formed as hollow mouldings and when assembled to abut each other on the split 15 provide a tubular structure through which the gear rod 1 extends concentrically with the bearing surface 5. In Figures 2 to 4 the positioning of the gear rod 1 is indicated in ghost form. The bearing member has axially opposed flat end faces 20 located in planes which are to extend radially relative to the rod axis 6 and which end faces are carried by flanges 21 of the moulding. Formed one in each flange 21 are two coinciding U-shaped recesses 22 each having substantially flat opposed side edges 23 and a part cylindrical concave bottom edge 24. The bottom edge 24 has a diameter corresponding to that of the gear rod 1. The recesses 22 open into an abutment face 25 located in the plane of the split 15. Extending from the abutment face 25 are a pair of cylindrical studs 26. Opening into the abutment face 25 are a pair of cylindrical sockets 27 which correspond in size to the studs 26 so that they can receive those studs as a press fit. The studs 26 and sockets 27 are offset from a radially/laterally extending centre line 6A of the bearing member so that when one of the two bearing members is inverted axially with respect of the other bearing member, the faces 25 of the two bearing members can be moved into abutment as one stud 26 is received in one socket 27 and the other stud 26 is received in the other socket 27 between the respective bearing members to provide a firm fitting for the surface portions 5A to present the part spherical bearing surface 5.

Also projecting from the plane of the abutment face 25 of the bearing member is a clip having opposed legs 30. The clip is generally C-shaped to provide a seating which is part-cylindrical to correspond with the diameter of the gear rod 1 and within which that rod is intended to be captured as a snap fitting permitted by slight resilience of the plastics. Similarly to the aforementioned studs and sockets, the clip comprising the legs 30 is offset from the lateral centre line 6A of the part spherical bearing surface which is to be formed so that when the two bearing members 14 and 14A are assembled as previously mentioned, the legs 30 of one such member will not interfere with the legs 30 on the other member and the pair of legs on each member is accommodated within the hollow formation of the other member.

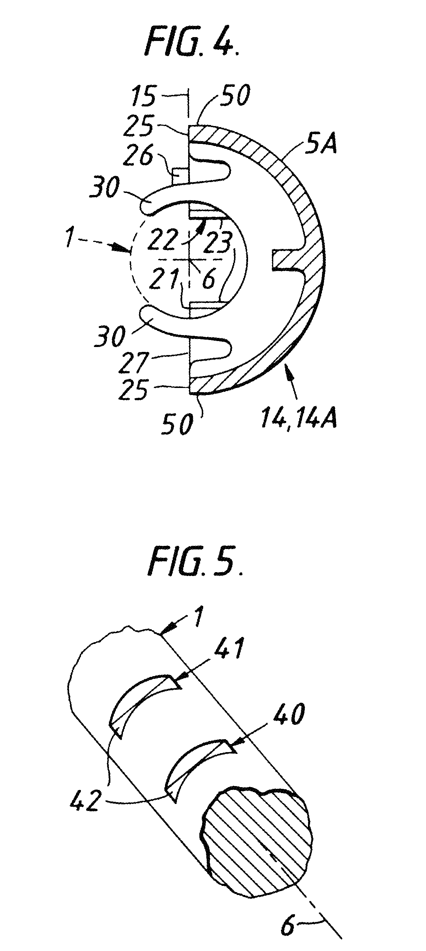

As is best seen in Figures 2 and 5, the gear rod 1 is provided with two axially spaced sets of recessed flats 40 and 41. The flats in each set comprise a pair of diametrically opposed and parallel flat faces 42 which are conveniently pressed or machined in the gear rod. The faces 42 in each of the sets 40 and 41 are spaced to correspond to the spacing between the flat side edges 23 of the recesses 22 in the ends of the bearing members.

The ball 4 is assembled on the gear rod 1 by press fitting one of the bearing members 14 and 14A onto the rod so that the legs 30 flex and snap engage tightly over the cylindrical surface of the rod as the sets of flats 40 and 41 on the rod are received in the respective U-shaped recesses 22. During such fitting the flat side edges 23 of the recesses 22 abut the opposed flats 42 of the respective sets 40 and 41 while the cylindrical profile of the rod abuts in complementary manner against the bottom edge 24 of the U-shaped recesses. The second bearing member is now fitted around the rod to engage with the first bearing member relative to which it is axially inverted. During this latter fitting the studs and sockets 26 and 27 engage between the two members as the clip 30 of the second member snap engages over the rod and the U-shaped recesses 22 move into engagement with the respective sets of flats 40 and 41 in a similar manner to that previously described.

With the two bearing members 14 and 14A assembled as a firm fit on and around the gear rod, the engagement of the U-shaped recesses 22 with the sets of recessed flats 40 and 41 prevents the ball 4 which is thus formed from rotating on the rod about its axis 6 and also prevents the ball from displacement axially relative to the rod.

Preferably the marginal peripheral edge of the bearing surface portion 5A adjacent to the abutment face 25 of the bearing member is relieved around the circumference of that edge. This relief may be provided by a circumferential flat 50 forming a cylindrical surface co-axial with the axis of the bearing surface 5 and the diameter of this flat 50 is slightly less than the diameter of the spherical bearing surface 5. It is recognised that moulding tolerances will be provided for manufacture of the bearing members 14 and 14A and these tolerances may present a slight but acceptable mis-match between the bearing surface portions 5A in the assembly of the ball 4. By providing the aforementioned relief, a slight edge which may be formed between the abutting bearing members in the external surface of the ball at the split can be accommodated within the diameter of the part spherical bearing surface 5 and therefore not adversely affect the bearing characteristics.

The two bearing members may be adhesively secured or otherwise bonded together in their assembly on the steering rod 1. In addition, or alternatively, the bearing members may be retained in firm engagement on the rod by said members being captured within the seating 12 of the housing 7.

## Claims

1. A gear lever structure comprising a longitudinally extending gear rod (1) having a ball (4) with a part spherical bearing surface (5) substantially concentric with the rod (1) and by which the rod (1) is to be mounted to exhibit universal pivotal movement, said ball (4) being located on the rod (1) between and remote from the ends thereof and comprising at least two moulded bearing members (14, 14A) which present said bearing surface (5) and are assembled on and around the rod (1) to engage with each other in a substantially longitudinally extending plane or planes (15), said bearing members (14, 14A) being retained on the rod (1) to be restrained against rotation and longitudinal displacement relative thereto, CHARACTERISED IN THAT the bearing members (14, 14A) each comprise clip means (30) with which the gear rod (1) engages for each bearing member (14, 14A) to be retained on the rod (1) independently of the other bearing member or members.

2. A structure as claimed in claim 1 in which the ball (4) is formed by two said bearing members (14, 14A).

3. A structure as claimed in either claim 1 or claim 2 in which the bearing members (14, 14A) are substantially identical to each other.

4. A structure as claimed in any one of claims 1 to 3 in which the bearing members (14, 14A) comprise co-operating projections (26) and recesses (27) which engage between those members (14, 14A) when the ball (4) is assembled on the rod (1) for bearing surface portions (5A) on the members (14, 14A) to present the part spherical bearing surface (5).

5. A structure as claimed in claim 4 in which the projections and recesses comprise co-operating studs (26) and sockets (27).

6. A structure as claimed in either claim 4 or claim 5 in which the co-operating projections (26) and recesses (27) are located within the volume defined by the part spherical bearing surface (5).

7. A structure as claimed in any one of the preceding claims in which each bearing member (14, 14A) has clip means (30) with which the gear rod (1) snap engages.

8. A structure as claimed in any one of the preceding claims in which the clip means (30) is located within the volume defined by the part spherical bearing surface (5).

9. A structure as claimed in any one of the preceding claims in which the rod (1) has at least a part length thereof of non-circular lateral section (40, 41) and said members (14, 14A) co-operate with that section (40, 41) during engagement of the gear rod (1) with the clip means (30) to restrain the ball (4) from rotation about the gear rod (1).

10. A structure as claimed in claim 9 in which said non-circular lateral section comprises at least one flat (40, 41) on the gear rod (1) against which flat at least one bearing member (14, 14A) abuts.

11. A structure as claimed in either claim 9 or claim 10 in which the ball (4) is formed by two substantially identical bearing members (14, 14A), and wherein the gear rod (1) is substantially cylindrical and is provided with diametrically opposed flats (40, 41) and said bearing members (14, 14A) have substantially U-shaped recesses (22) which straddle the opposed flats (40, 41) for the rod (1) to be received as a substantially complementary fit in said U-shaped recesses (22).

12. A structure as claimed in any one of the preceding claims in which the ball (4) is restrained against longitudinal displacement relative to the gear rod (1) by substantially complementary and laterally extending groove means (40, 41) and recess means (22) which inter-engage between the gear rod (1) and the bearing members (14, 14A).

13. A structure as claimed in claim 12 when appendant to claim 11 in which engagement between the opposed flats (40, 41) on the rod (1) and the U-shaped recesses (22) in the bearing members (14, 14A) restrains the ball (4) from said longitudinal displacement relative to the rod (1).

14. A structure as claimed in any one of the preceding claims in which the ball (4) is formed by two substantially identical bearing members (14, 14A) which are assembled around the gear rod (1) with one such member (14) being inverted longitudinally on the rod (1) relative to the other such member (14A).

15. A structure as claimed in any one of the preceding claims in which the bearing members (14, 14A) are adhesively secured or otherwise bonded together.

16. A structure as claimed in any one of the preceding claims in which the bearing members (14, 14A) are moulded in thermoplastics.

17. A structure as claimed in any one of the preceding claims in which the ball (4) is formed by two substantially identical bearing members (14, 14A), said bearing members (14, 14A) having abutting faces (25) to provide a split (15) therebetween in a diametral plane of the part spherical bearing surface (5) and which plane substantially includes a longitudinal axis (6) of the gear rod part length that extends through the ball (4).

18. A structure as claimed in any one of the preceding claims in which the exterior surface of the ball (4) along marginal edges (50) of two bearing members (14, 14A) adjacent to a split (15) between those two members (14, 14A) is relieved so that said marginal edges (50) have a diameter less than that of the part spherical bearing surface (5).

19. A structure as claimed in any one of the preceding claims in which the ball (4) is located in a housing (7) with its part spherical bearing surface (5) accommodated in a substantially complementary part spherical seating (12) to provide a universal bearing for pivotal displacement of the rod (1).

## Patentansprüche

1. Schalthebelanordnung mit einer in Längsrichtung verlaufenden Schaltstange (1), die eine Kugel (4) mit einer teilweise kugelförmigen Lagerfläche (5) im wesentlichen konzentrisch zu der Schaltstange (1) hat und durch welche die Stange (1) montiert wird, um eine universelle Schwenkbewegung zu ergeben, wobei die Kugel (4) an der Stange (1) zwischen deren Enden und fern davon angeordnet ist und wenigstens zwei geformte Lagerkörper (14, 14A) aufweist, welche die Lagerfläche (5) ergeben und an der Stange (1) und um diese herum zusammengebaut sind, um miteinander in einer im wesentlichen in Längsrichtung verlaufenden Ebene oder in Ebenen (15) in Eingriff zu sein, wobei die Lagerkörper (14, 14A) an der Stange (1) gehalten werden, um gegen eine Drehung und eine Längsverschiebung relativ dazu zurückgehalten zu werden, dadurch gekennzeichnet, daß die Lagerkörper (14, 14A) jeweils eine Klemmeinrichtung (30) aufweisen, mit welcher die Schaltstange (1) zusammenwirkt, damit jeder Lagerkörper (14, 14A) an der Stange (1) unabhängig von dem anderen Lagerkörper oder den Körpern zurückgehalten wird.

2. Anordnung nach Anspruch 1, bei welcher die Kugel (4) durch zwei Lagerkörper (14, 14A) geformt ist.

3. Anordnung nach Anspruch oder Anspruch 2, bei welcher die Lagerkörper (14, 14A) im wesentlichen identisch zueinander sind.

4. Anordnung nach einem der Ansprüche 1 bis 3, bei welcher die Lagerkörper (14, 14A) zusammenwirkende Vorsprünge (26) und Aussparungen (27) aufweisen, die zwischen diesen Körpern (14, 14A) im Eingriff sind, wenn die Kugel (4) an der Stange (1) zusammengebaut wird, damit Lagerflächenbereiche (5A) an den Körpern (14, 14A) die teilweise kugelförmige Lagerfläche (5) ergeben.

5. Anordnung nach Anspruch 4, bei welcher die Vorsprünge und Aussparungen aus zusammenwirkenden Ansatzbolzen (26) und Buchsen (27) bestehen.

6. Anordnung nach Anspruch 4 oder Anspruch 5, bei welcher die zusammenwirkenden Vorsprünge (26) und Aussparungen (27) innerhalb des Volumens angeordnet sind, das durch die teilweise kugelförmige Lagerfläche (5) definiert ist.

7. Anordnung nach einem der vorhergehenden Ansprüche, bei welcher jeder Lagerkörper (14, 14A) eine Klemmeinrichtung (30) hat, mit der die Schaltstange (1) in einem Schnappeingriff ist.

8. Anordnung nach einem der vorhergehenden Ansprüche, bei welcher die Klemmeinrichtung (30) innerhalb des Volumens angeordnet ist, das durch die teilweise kugelförmige Lagerfläche (5) definiert ist.

9. Anordnung nach einem der vorhergehenden Ansprüche, bei welcher die Stange (1) wenigstens eine Teillänge mit einem nicht kreisförmigen Querschnittsprofil (40, 41) hat und die Körper (14, 14A) mit diesem Profil (40, 41) während des Eingriffs der Schaltstange (1) mit der Klemmeinrichtung (30) zusammenwirken, um die Kugel (4) an einer Drehung um die Schaltstange (1) herum zu hindern.

10. Anordnung nach Anspruch 9, bei welcher das nicht kreisförmige Querschnittsprofil aus wenigstens einer Abflachung (40, 41) an der Schaltstange (1) besteht, gegen welche wenigstens ein Lagerkörper (14, 14A) anstößt.

11. Anordnung nach Anspruch 9 oder Anspruch 10, bei welcher die Kugel (4) durch zwei im wesentlichen identische Lagerkörper (14, 14A) geformt ist und bei welcher die Schaltstange (1) im wesentlichen zylindrisch und mit diametral gegenüberliegenden Abflachungen (40, 41) versehen ist und die Lagerkörper (14, 14A) im wesentlichen U-förmige Aussparungen (22) haben, welche die gegenüberliegenden Abflachungen (40, 41) übergreifen, damit die Stange (1) in den U-förmigen Aussparungen (22) mit einer im wesentlichen komplementären Passung aufgenommen wird.

12. Anordnung nach einem der vorhergehenden Ansprüche, bei welcher die Kugel (4) gegen die Längsverschiebung relativ zu der Schaltstange (1) durch eine im wesentlichen komplementäre und breitseits verlaufende Nuteinrichtung (40, 41) und eine Ausspareinrichtung (22) zurückgehalten wird, die zwischen der Schaltstange (1) und den Lagerkörpern (14, 14A) miteinander im Eingriff sind.

13. Anordnung nach Anspruch 12 in der Rückbeziehung auf Anspruch 10, bei welcher der Eingriff zwischen den gegenüberliegenden Abflachungen (40, 41) an der Stange (1) und den U-förmigen Aussparungen (22) in den Lagerkörpern (14, 14A) die Kugel an der Längsverschiebung relativ zu der Stange (1) hindert.

14. Anordnung nach einem der vorhergehenden Ansprüche, bei welcher die Kugel (4) durch zwei im wesentlichen identische Lagerkörper (14, 14A) geformt ist, die um die Schaltstange (1) herum zusammengebaut sind, wobei der eine Körper (14) an der Stange (1) relativ zu dem anderen Körper (14A) in Längsrichtung umgekehrt ist.

15. Anordnung nach einem der vorhergehenden Ansprüche, bei welcher die Lagerkörper (14, 14A) durch ein Klebemittel befestigt oder sonstwie miteinander verbunden sind.

16. Anordnung nach einem der vorhergehenden Ansprüche, bei welcher die Lagerkörper (14, 14A) aus Thermoplasten geformt sind.

17. Anordnung nach einem der vorhergehenden Ansprüche, bei welcher die Kugel (4) durch zwei im wesentlichen identische Lagerkörper (14, 14A) geformt ist, wobei die Lagerkörper (14, 14A) Stoßflächen (25) haben, um dazwischen einen Spalt (15) in einer Durchmesserebene der teilweise kugelförmigen Lagerfläche (5) zu schaffen, wobei diese Ebene im wesentlichen eine Längsachse (6) der Teillänge der Schaltstange einschließt, welche durch die Kugel (4) hindurch verläuft.

18. Anordnung nach einem der vorhergehenden Ansprüche, bei welcher die Außenfläche der Kugel (4) entlang von randseitigen Kanten (50) der beiden Lagerkörper (14, 14A) neben einem Spalt (15) zwischen diesen beiden Körpern (14, 14A) ausgespart ist, sodaß diese randseitigen Kanten (50) einen Durchmesser kleiner als derjenige der teilweise kugelförmigen Lagerfläche (5) haben.

19. Anordnung nach einem der vorhergehenden Ansprüche, bei welcher die Kugel (4) in einem Gehäuse (7) angeordnet ist, wobei ihre teilweise kugelförmige Lagerfläche (5) in einem im wesentlichen komplementären, teilweise kugelförmigen Sitz (12) aufgenommen ist, um ein Universallager für die drehbare Verlagerung der Stange (1) zu schaffen.

## Revendications

1. Montage de levier de vitesses comprenant une tige de vitesses (1) s'étendant longitudinalement et comportant une boule (4) munie d'une surface d'appui partiellement sphérique (5) essentiellement concentrique avec la tige (1) et permettant de monter cette tige (1) pour qu'elle effectue un mouvement de pivotement universel, la boule (4) étant placée sur la tige (1) entre ses extrémités et en étant loin de celles-ci, cette boule (4) comprenant au moins deux éléments de support moulés (14, 14A) qui présentent la surface d'appui (5) et sont assemblés sur et autour de la tige (1) de manière à venir en prise l'un avec l'autre dans un plan ou des plans (15) s'étendant essentiellement longitudinalement, ces éléments de support (14, 14A) étant maintenus sur la tige (1) de façon qu'ils ne puissent tourner et se déplacer longitudinalement par rapport à celle-ci, caractérisé en ce que les éléments de support (14, 14A) comprennent chacun des moyens de clip (30) permettant à la tige de vitesses (1) de recevoir chaque élément de support (14, 14A) en le retenant sur cette tige (1) indépendamment de l'autre ou des autres éléments de support.

2. Montage selon la revendication 1, dans lequel la boule (4) est constituée de deux des éléments de support (14, 14A).

3. Montage selon lune quelconque des revendications 1 et 2, dans lequel les éléments de support (14, 14A) sont essentiellement identiques les uns aux autres.

4. Montage selon l'une quelconque des revendications 1 à 3, dans lequel les éléments de support 14, 14A) comprennent des saillies (26) et des évidements (27) en coopération qui s'engagent entre ces éléments (14, 14A) lorsque la boule (4) est assemblée sur la tige (1), de façon que les parties de surface d'appui (5A) sur les éléments (14, 14A) forment la surface d'appui partiellement sphérique (5).

5. Montage selon la revendication 4, dans lequel les saillies et les creux sont constitués par des goujons (26) et des évidements (27) en coopération.

6. Montage selon l'une quelconque des revendications 4 et 5, dans lequel les saillies (26) et les évidements (27) en coopération sont placés à l'intérieur du volume défini par la surface d'appui partiellement sphérique (5).

7. Montage selon l'une quelconque des revendications précédentes, dans lequel chaque élément de support (14, 14A) comporte des moyens de clip (30) s'enclenchant sur la tige de vitesses (1).

8. Montage selon l'une quelconque des revendications précédentes, dans lequel les moyens de clip (30) sont placés à l'intérieur du volume défini par la surface d'appui partiellement sphérique (5).

9. Montage selon l'une quelconque des revendications précédentes, dans lequel la tige (1) comporte au moins une partie de sa longueur qui présente une section latérale non circulaire (40, 41), et les éléments (14, 14A) coopèrent avec cette section (40, 41) pendant l'enclenchement de la tige de vitesses (1) avec les moyens de clip (30), de manière à empêcher la boule(4) de tourner sur la tige de vitesses (1).

10. Montage selon la revendication 9, dans lequel la section latérale non circulaire comprend au moins un méplat (40, 41) sur la tige de vitesses (1), méplat contre lequel au moins un élément de support (14, 14A) vient buter.

11. Montage selon l'une ou l'autre des revendications 9 et 10, dans lequel la boule (4) est constitué de deux éléments de support essentiellement identiques (14, 14A), et dans lequel la tige de vitesses (1) est essentiellement cylindrique et munie de méplats diamétralement opposés (40, 41), les éléments de support (14, 14A) comportant des évidements essentiellement en forme de U (22) qui chevauchent les méplats opposés (40, 41) de la tige (1) de manière à venir se loger dans un emboîtement essentiellement complémentaire dans les évidements en forme de U (22).

12. Montage selon l'une quelconque des revendications précédentes, dans lequel la boule (4) est retenue contre tout déplacement longitudinal par rapport à la tige de vitesses (1), par les moyens de méplats (40, 41) et les moyens d'évidements (22) essentiellement complémentaires et s'étendant latéralement, qui s'engagent mutuellement entre la tige de vitesses (1) et les éléments de support (14, 14A).

13. Montage selon la revendication 12 dans la mesure où elle dépend de la revendication 11, dans lequel l'engagement entre les méplats opposés (40, 41) de la tige de vitesses (1) et les évidements en forme de U (22) des éléments de support (14, 14A), empêchent la boule (4) de se déplacer longitudinalement par rapport à la tige (1).

14. Montage selon l'une quelconque des revendications précédentes, dans lequel la boule (4) est formée de deux éléments de support essentiellement identiques (14, 14A) qui sont assemblés autour de la tige de vitesses (1) de façon que l'un de ces éléments (14) soit inversé longitudinalement sur la tige (1) par rapport à l'autre élément (14A).

15. Montage selon l'une quelconque des revendications précédentes, dans lequel les éléments de support (14, 14A) sont collés ou fixés ensemble de toute autre manière.

16. Montage selon l'une quelconque des revendications précédentes, dans lequel les éléments de support (14, 14A) sont moulés en matière thermoplastique.

17. Montage selon l'une quelconque des revendications précédentes, dans lequel la boule (4) est formée de deux éléments de support essentiellement identiques (14, 14A), ces éléments de support (14, 14A) comportant des faces de butée (25) pour former une fente (15) entre elles dans un plan diamétral de la surface d'appui partiellement sphérique (5), ce plan comprenant essentiellement un axe longitudinal (6) de la longueur partielle de tige de vitesses qui passe a travers la boule (4).

18. Montage selon l'une quelconque des revendications précédentes, dans lequel la surface extérieure de la boule (4) le long des bords marginaux (50) de deux éléments de support (14, 14A) adjacents à une fente (15) entre ces deux éléments (14, 14A), est dégagée de façon que les bords marginaux (50) aient un diamètre inférieur à celui de la surface d'appui partiellement sphérique (5).

19. Montage selon l'une quelconque des revendications précédentes, dans lequel la boule (4) est placée dans un carter (7) de façon que sa surface d'appui partiellement sphérique (5) vienne se loger dans un logement partiellement sphérique essentiellement complémentaire (12) pour former un support universel permettant le déplacement de pivotement de la tige de vitesses (1).
